# EUROPÄISCHE PATENTSCHRIFT

(11) **EP 2 528 967 B1**
(45) Veröffentlichungstag und Bekanntmachung des Hinweises auf die Patenterteilung: **20.11.2013**
(21) Anmeldenummer: 10792903.6
(22) Anmeldetag: 15.12.2010
(51) Int. Cl.: C08K 3/22, E01F 9/04, C09D 4/06, C09D 133/04

(54) **FORMULIERUNGEN ZUR HERSTELLUNG VON FAHRBAHNMARKIERUNGEN MIT HAFTUNG AUF TROCKENEM UND FEUCHTEM BETON**
FORMULATIONS FOR PRODUCING ROADWAY MARKINGS WITH ADHESION ON DRY AND DAMP CONCRETE
FORMULATIONS POUR LA PRÉPARATION DE MARQUAGES DE VOIES DE CIRCULATION ADHÉRANT AU BÉTON SEC OU MOUILLÉ

(30) Priorität: 18.02.2010 DE 102010002123; 26.01.2010 DE 102010001217
(43) Veröffentlichungstag der Anmeldung: 05.12.2012
(73) Patentinhaber: Evonik Röhm GmbH, 64293 Darmstadt (DE)
(72) Erfinder: NEUGEBAUER, Peter, 65552 Limburg (DE); KLEIN, Alexander, 55435 Gau-Algesheim (DE); HEEB, Heike, 63526 Erlensee (DE); RAMESCH, Klaus, 63512 Hainburg (DE); SCHOLL, Sybille, 63517 Rodenbach (DE); KIZEWSKI, Ingrid, 63457 Hanau (DE)
(86) Internationale Anmeldenummer: PCT/EP2010/069681
(87) Internationale Veröffentlichungsnummer: WO 2011/091908

(56) Entgegenhaltungen:
- EP-A1- 0 874 011
- GB-A- 2 108 140
- US-A- 5 820 993

## Beschreibung

### Gebiet der Erfindung

Die vorliegende Erfindung umfasst eine neuartige Formulierung zur Markierung von Fahrbahnen, bestehend aus unterschiedlichen Untergründen wie z.B. Beton. Darüber hinaus betrifft die vorliegende Erfindung eine Formulierung zur Markierung von Fahrbahnen, die sowohl auf feuchten wie auch trockenen Oberflächen appliziert werden kann.

An moderne Fahrbahnmarkierungen wird eine Reihe von Ansprüchen gestellt. Zum einen wird von solchen Systemen erwartet, dass sie eine einfache Auftragbarkeit auf der Straßenoberfläche und gleichzeitig hohe Lagerstabilität sowie eine lange Lebensdauer der Markierung mit sich bringen. Zur Verlegung von Fahrbahnmarkierungen ist es nach Stand der Technik notwendig, den zu markierenden Verkehrsabschnitt vor dem Auftragen vollständig zu trocknen. Dies macht die Markierung vor allem von Straßen aufwändig und witterungsabhängig. Bei Nässe, etwa nach Regen, ist eine Markierung mit etablierten Systemen zumeist überhaupt nicht möglich.

Darüber hinaus stellt Beton einen für die meisten Markierungssysteme schlechten Untergrund dar. Die Haftung und damit die Lebensdauer der Markierung sind vergleichend zu Asphaltuntergründen in der Regeln deutlich reduziert. Daher muss Beton nach Stand der Technik erst mit einer Grundierung beschichtet werden, bevor die eigentliche Straßenmarkierung aufgetragen werden kann.

### Stand der Technik

Als Fahrbahnmarkierungsmaterialien werden zurzeit Systeme wie Lösungsmittel basierte Farben, Wasserfarben, thermoplastische Farben, Farben auf Basis von Reaktionsharzen sowie vorgefertigte Klebebänder eingesetzt. Letztere haben den Nachteil, dass sie aufwändig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit Glasperlen.

In EP 0 705 307 wird ein Grundierungssystem für solche Klebebänder beschrieben, dass auch explizit auf feuchten Untergründen verwendet werden kann. Der trocknende Effekt besteht überwiegend darin, dass die Grundierungen Lösungsmittel enthalten, die mit Wasser ein Azeotrop bilden und so kleine Mengen Wasser von der Oberfläche beim Abdampfen entfernen. Dieses Vorgehen hat neben den Nachteilen, die ein solches Klebeband an sich mitbringt weitere Nachteile: die Menge entfernbaren Wassers ist beschränkt, so dass eine gewisse Feuchte nicht überschritten werden darf. Zusätzlich muss zwischen dem Auftragen der Grundierung und der Verlegung des Klebebandes mindestens 20 min gewartet werden.

Thermoplastische Überzüge, wie sie in DE 24 07 159 beschrieben sind, die im geschmolzenen Zustand auf der Fahrbahnoberfläche aufgebracht werden, können an sich allein durch die Temperatur von z.B. 180 °C zur Trocknung des Untergrundes beitragen. Ihre Verwendung hat den großen Nachteil eines zusätzlichen Verfahrensschrittes, indem das Produkt erst zum Schmelzen gebracht werden muss, bevor es appliziert werden kann. Dies ist nicht nur wegen der hohen Temperatur potentiell gefährlich, sondern thermoplastische Systeme weisen an sich eine erhöhte Abriebsneigung und eine verminderte thermische Belastbarkeit auf. Thermoplastische Systeme sind oft deutlich kurzlebiger als Systeme, die z.B. auf Reaktionsharzen basieren und unter Vernetzung reagieren.

In Bezug auf die Trocknungsgeschwindigkeit sind insbesondere wässrige Systeme, wie beispielsweise in EP 1 505 127, EP 1 162 237 und EP 2 077 305 beschrieben, von großem Nachteil. Die Trocknungszeit eines solchen Systems ist deutlich länger. Die Dispergierbarkeit in Wasser geht zwar unweigerlich mit einer Anwendbarkeit auf feuchten Untergründen einher. Da aber zwangsläufig in solchen Systemen weder Trockenmittel noch feuchtigkeitsvernetzende Komponenten verwendet werden können, sind die Formulierungsfreiheiten eines solchen Systems und damit einhergehend die Optimierung der Haftung auf feuchten Untergründen deutlich eingeschränkt.
Das Problem der geringen Trocknungsgeschwindigkeit kann, wie in US 2007/0148357 beschrieben, durch Zugabe von Colösungsmitteln verbessert werden. Dadurch wird die Haftung auf schwierigen Untergründen jedoch nicht zwangsläufig verbessert.

Alle beschriebenen Fahrbahnmarkierungssysteme enthalten Titandioxid als Pigment und Calciumcarbonat als Füllstoff. Titandioxid hat jedoch den Nachteil, relativ teuer zu sein und damit Fahrbahnmarkierungen mit besonders hohem Weißheitsgrad, der aus verkehrstechnischen Gesichtspunkten erstrebenswert ist, unwirtschaftlich zu machen.

### Aufgabe

Die Aufgabe der vorliegenden Erfindung ist die Bereitstellung einer neuen Formulierung zur Markierung von Fahrbahnoberflächen, die z.B. auf Beton ohne Grundierung applizierbar ist und nach dem Trocknen gute Haftungseigenschaften aufweist.

Darüber hinaus besteht die Aufgabe darin, eine neue Formulierung zur Markierung von Fahrbahnen zur Verfügung zu stellen, die sowohl auf feuchtem wie auch auf trocknem Beton applizierbar ist.

Eine besondere Aufgabe besteht darin, ein Reaktionsharz zur Verfügung zu stellen, das gegenüber dem Stand der Technik auf Fahrbahnoberflächen, wie z.B. auf Beton, langlebigere bzw. mindestens genauso langlebige Fahrbahnmarkierungen mit guten Retroreflektionseigenschaften, guter Tages- und Nachtsichtbarkeit, einem hohen, stabilen Weissgrad und einer guten Griffigkeit, auch bei nasser Fahrbahn, ermöglicht.

Darüber hinaus soll die mit der neuen Formulierung hergestellte Fahrbahnmarkierung langlebig, leicht applizierbar, flexibel formulierbar, lagerstabil und nach der Applikation schnell wiederbefahrbar sein.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch die Bereitstellung eines neuen Fahrbahnmarkierungssystems, genauer durch die Bereitstellung einer neuen flexiblen Kaltplastik auf (Meth)acrylatbasis.

Insbesondere wurden die Aufgaben durch Bereitstellung einer neuartigen Formulierung, verwendbar als Kaltplastik, die mindestens 1 Gew%, bevorzugt mindestens 2,5 Gew%, besonders bevorzugt mindestens 5 Gew% Calciumoxid enthält, gelöst. Das Calciumoxid wird als Bestandteil einer anorganischen Mischung der Formulierung zugegeben. Diese anorganische Mischung besteht zu mindestens 30 Gew%, bevorzugt zu mindestens 40 Gew%, besonders bevorzugt zu mindestens 50 Gew% aus Calciumoxid. Das Calciumoxid muss in der anorganischen Mischung nicht als reines Calciumoxid vorliegen, sondern kann auch in gebundener Form, z.B. als Tricalciumsilikat (3 CaO · SiO₂), als Dicalciumsilikat (2 CaO · SiO₂), als Tricalciumaluminat (3 CaO · Al₂O₃) oder als Tetracalciumaluminatferrit (4 CaO · Al₂O₃ · Fe₂O₃) vorliegen.

Die anorganischen Mischungen können neben Cacliumoxid bzw. gebundenen Calciumoxid unter anderem bis zu 50 Gew% Siliziumdioxid, bis zu 20 Gew% Aluminiumoxid und bis zu 10 Gew% Eisenoxide enthalten. Bevorzugt ist der Anteil an Eisenoxid jedoch kleiner 1 Gew%, besonders bevorzugt kleiner 0,5 Gew% und insbesondere bevorzugt kleiner 0,1 Gew%. In geringeren Mengen können weiterhin auch Sulfate, z.B. des Calciums, des Eisens oder des Aluminiums enthalten sein.

Bei der anorganischen Mischung kann es sich insbesondere um gebrannten Kalk, vorzugsweise hellen Feinkalk, oder Zement, besonders um Portlandzement handeln. In einer ganz besonders bevorzugten Ausführungsform handelt es sich bei der anorganischen Mischung um Weißzement mit einem Eisenoxid-Anteil kleiner 0,5 Gew%. Besonderer Vorteil des Weißzements ist die helle Farbe, die z.B. bei einer Verwendung der Kaltplastik eine geringere Zugabe von Pigmenten erlaubt.

Überraschend wurde gefunden, dass eine solche Formulierung, verwendet als Kaltplastik zur Markierung von Fahrbahnen, auf Beton eine gute Haftung aufweist.

Darüber hinaus wurde überraschend gefunden, dass das Calciumoxid eine Markierung von feuchten oder sogar nassen Fahrbahnoberflächen aus Beton ermöglicht. Darüber hinaus trägt das Calciumoxid im Gegensatz zum nach Stand der Technik eingesetzten Calciumcarbonat zusätzlich zur Festigkeit und damit zur Lebensdauer der Fahrbahnmarkierung bei.

Weiterhin ist das Calciumoxid, insbesondere wenn es in Form eines Weißzements oder Feinkalks in die Formulierung eingebracht wird, zur Erhöhung des Weißgrades der Kaltplastik geeignet. Auf diese Weise kann die Konzentration anderer, in der Regel teurerer und nicht zur Haftung beitragender Pigmente, wie Titandioxid, reduziert werden.

Kaltplastiken zur Fahrbahnmarkierung gemäß dem Stand der Technik enthalten mineralische Feinfüllstoffe und Grobfüllstoffe. Diese Materialien dienen als Rutschhemmer und werden daher insbesondere zur Griffverbesserung zugegeben. Als Grobfüllstoffe werden Quarze, Cristobalite, Korunde und Aluminiumsilikate eingesetzt. Feinfüllstoffe werden aus der Gruppe der Erdalkalicarbonate, wie z.B. Calciumcarbonat, Quarze, Quarzmehle, gefällten und pyrogenen Kieselsäuren, Pigmente und Cristobalite eingesetzt. In der erfindungsgemäßen Ausführung einer solchen Kaltplastik können einer dieser Füllstoffe bzw. sämtliche Füllstoffe durch Calciumoxid, bzw. die anorganische Mischung, Calciumoxid enthaltend, ersetzt werden. Das Calciumoxid bzw. der Zement, bevorzugt Weißzement, ist genauso als Füllstoff geeignet, ohne dass eine entscheidende Abnahme der Rutschhemmung feststellbar wäre.

Insbesondere wird die Aufgabe einer gegenüber dem Stand der Technik breiteren Anwendbarkeit auf verschiedenen, trockenen oder nassen Untergründen bei gleichzeitig sehr guten optischen Eigenschaften, wie Weissgrad, Tages- bzw. Nachtsichtbarkeit, Reflektionseigenschaften und einer langen Lebensdauer durch die Zugabe von Calciumoxid zu Standardsystemen zur Straßenmarkierung, wie beispielsweise zu Kaltplastiken, gelöst: Eine besondere Leistung der vorliegenden Erfindung beruht darauf, dass eine große Zahl etablierter Straßenmarkierungssysteme durch die erfindungsgemäße Modifikation ohne Grundierung oder Vorbehandlung der Oberfläche auf nassen Beton-Untergründen eingesetzt werden können.

Solche Kaltplastiken basieren in der Regel auf Reaktionsharzen, bestehend aus Vernetzern, wie beispielsweise Dimethacrylaten, Monomeren, in der Regel (Meth)acrylate und/oder mit (Meth)acrylaten copolymerisierbare Komponenten, Bindemitteln bzw. Präpolymeren, in der Regel auf Polyester- und/oder Poly(meth)acrylat-Basis, einem Beschleuniger und optionalen Urethan(meth)acrylaten. Darüber hinaus können weitere Hilfsstoffe oder Additive wie Entschäumer, Stabilisatoren, Inhibitoren, Regler oder Wachse enthalten sein.

Auf Basis dieser Reaktionsharze werden Formulierungen, die eine von optional zwei bis drei Komponenten der gesamten Kaltplastik ausmachen, hergestellt. Diese Formulierungen enthalten in der Regel neben den Reaktionsharzen folgende Komponenten: einen oder mehrere Initiatoren, anorganische und/oder organische Pigmente, wie beispielsweise Titandioxid, und weitere mineralische Füllstoffe. Darüber hinaus können weitere Additive, wie Thioxotropie-, Rheologie- und/oder Dispergier-Hilfsmittel enthalten sein.

Insbesondere weisen die erfindungsgemäßen Kaltplastiken folgende Komponenten auf: 15 Gew% bis 45 Gew% eines Reaktionsharzes, 1 Gew% bis 5 Gew% einer Mischung, enthaltend ein oder mehrere Initiatoren, 2 Gew% bis 40 Gew% der besagten anorganischen Mischung enthalten Calciumoxid, 0 Gew% bis 15 Gew% eines anorganischen Pigments, bevorzugt Titandioxid, und 20 Gew% bis 60 Gew% weiterer mineralischer Füllstoffe.

Das Reaktionsharz weist dabei bevorzugt folgende Inhaltsstoffe auf: 5 Gew% bis 30 Gew% Dimethacrylate, 30 Gew% bis 70 Gew% (Meth)acrylate und/oder mit (Meth)acrylaten copolymerisierbare Komponenten, 0 Gew% bis 40 Gew% Urethan(meth)acrylate, 15 Gew% bis 35 Gew% Poly(meth)acrylate und/oder Polyester, 0 Gew% bis 5 Gew% Beschleuniger und gegebenenfalls weitere Hilfsstoffe. Bei dem Initiator handelt es sich bevorzugt um Dilauroylperoxid und/oder Dibenzoylperoxid, Bei dem Beschleuniger handelt es sich bevorzugt um ein tertiäres, aromatisch substituiertes Amin.

In einer alternativen Ausführungsform ist das Peroxid Bestandteil des Reaktionsharzes und der Beschleuniger nicht Bestandteil des Reaktionsharzes, sondern einer getrennten Komponente der Kaltplastik.

Zusätzlich kann diese Komponente weitere Hilfsstoffe wie Netz- und/oder Dispergiermittel, einen griffigen (rutschfesten) Füllstoff und Antiabsetzmittel enthalten. Auch können die Glaskugeln, die zur Verbesserung der Reflexion zugesetzt werden, bereits in dieser Komponente der Kaltplastik enthalten sein. Alternativ können diese auch Bestandteil der zweiten Komponente sein und bevorzugt, je nach Auftragungsmechanismus der Fahrbahnmarkierung, können Glaskugeln als dritte Komponente aufgetragen werden. Bei diesem Vorgehen, zum Beispiel angewendet mit modernen Markierungsfahrzeugen mit einer zweiten Düse, werden die Kugeln direkt nach dem Auftrag der ersten beiden Komponenten auf diese aufgespritzt. Vorteil bei diesem Vorgehen ist, dass nur der Teil der Glaskugeln, der in die Markierungsmatrix eingebettet ist, mit den Bestandteilen der anderen beiden Komponenten benetzt ist und man erhält optimale Reflexionseigenschaften. Ganz besonders bei Anwendung dieser Technologie ist jedoch eine besonders gute Einbettung der Glasperlen und eine entsprechend gute Haftung der Markierungsmatrix bzw. der Fahrbahnmarkierungsformulierung an der Oberfläche der Glaskugeln wichtig. Genauer geregelt sind die geforderten Eigenschaften an eine Straßenmarkierung in DIN EN 1436.

Die zweite Komponente der Kaltplastik enthält den Initiator. Als Polymerisationsinitiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide wie Dilauroylperoxid, Dibenzoylperoxid, tert.-Butylperoctoat, Di(tert-butyl)peroxid (DTBP), Di·(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Die Peroxide können auch phlegmatisiert eingesetzt werden. Für Reaktionsharze zur Anwendung zum Beispiel für Fahrbahnmarkierungen sind besonders bevorzugt Dilauroylperoxid oder Dibenzoylperoxid. In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die erfindungsgemäße Kaltplastik als Summe der ersten und der zweiten sowie optional der dritten Komponente enthält zwischen 0,1 Gew% und 7 Gew%, bevorzugt zwischen 0,5 Gew% und 6 Gew% und ganz besonders bevorzugt zwischen 1 Gew% und 5 Gew% des Initiators bzw. der Mischung aus dem Initiator und dem Verdünnungsmittel.

Eine besondere Ausführungsform eines Redox-Starter-Systems für Reaktionsharze ist die Kombination aus Peroxiden und Beschleunigern, insbesondere Aminen. Als besagte Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt. Das erfindungsgemäße Reaktionsharz kann bis zu 7 Gew%, bevorzugt bis zu 5 Gew% und ganz besonders bevorzugt bis zu 3 Gew% eines Beschleunigers enthalten.

In einer alternativen Ausführungsform eines 3-K-Systems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der dritten Komponente handelt es sich um Glaskugeln und eventuell benötigte Haftvermittler. Die eingesetzten handelsüblichen Glasperlen haben Durchmesser von 10 µm bis 2000 µm, bevorzugt 50 µm bis 800 µm.

Ein entscheidender Bestandteil des erfindungsgemäßen Reaktionsharzes sind die Vernetzer. Insbesondere multifunktionelle Methacrylate wie Allyl(meth)acrylat. Besonders bevorzugt sind Di- oder Tri-(Meth)acrylate wie beispielsweise 1,4-Butandiol-di(meth)acrylat, Tetraethylenglycol-di(meth)acrylat, Triethylenglycol-di(meth)acrylat oder Trimethylolpropan-tri(meth)acrylat.

Ein weiterer Bestandteil von Reaktionsharzen zur Straßenmarkierung sind oft Urethan(meth)acrylate. Unter diesen versteht man Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen Methacrylaten ist EBECRYL 210-5129 der Firma UCB Chemicals. Urethan(meth)acrylate erhöhen in einem Reaktionsharz, ohne größere Temperaturabhängigkeit, die Flexibilität, die Reißfestigkeit und die Reißdehnung.

In einer besonderen Ausführungsform enthält die Kaltplastik zusätzlich einen Haftvermittler. Als Haftvermittler können alle funktionellen Verbindungen eingesetzt werden, die mit Beton und/oder Calciumoxid und/oder Zement in Wechselwirkung treten können. Bevorzugt wird der Haftvermittler in die Kaltplastik vor deren Applikation vor Ort eingebracht. Gegebenenfalls kann dabei der Haftvermittler in reinem Reaktionsharz verdünnt und dispergiert zur Kaltplastik zugegeben werden, um eine bessere Dosier- und Dispergierbarkeit zu erzielen. Das Reaktionsharz enthält dabei 0,1 Gew% bis 20 Gew%, bevorzugt 1 Gew% bis 5 Gew% Haftvermittler. Als Haftvermittler werden bevorzugt (Meth)acrylsäure, Blends aus (Meth)acrylaten und Polyisocyanat-Prepolymeren, die Phosphate eines hydroxyfunktionellen (Meth)acrylats oder silylfunktionelle (Meth)acrylate verwendet. Bevorzugte Beispiele für Blends aus (Meth)acrylaten und Polyisocyanat-Prepolymeren sind Degadur^{®} Zusatzmittel BE und Degadur^{®} i-Component, jeweils der Firma Evonik Röhm GmbH. Ein bevorzugtes Beispiel für Phosphate von hydroxyfunktionellen (Meth)acrylaten ist Methacryloxyloxyethylphosphat, wie es von der Firma Evonik Röhm GmbH unter dem Namen Haftvermittler HP vertrieben wird. Bevorzugtes Beispiel für ein silylfunktionelles (Meth)acrylat ist Dynasylan^{®} MEMO der Firma Evonik Degussa GmbH. Dabei handelt es sich um 3-Methacryloxypropyltrimethoxysilan.

In einer weiteren alternativen, besonders lagerstabilen Ausführungsform, wird die Kaltplastik in zwei Komponenten getrennt gelagert und kurz vor der Applikation miteinander vermischt. Die erste Komponente enthält in dieser Ausführungsform Haftvermittler und das Calciumoxid, die zweite Komponente andere Füllstoffe und die Pigmente. Reaktionsharz, Additive, Reflexperlen und Beschleuniger können dabei in einer der beiden oder in beiden Komponenten enthalten sein. Der ohnehin direkt vor der Applikation zugegebene Initiator wird in dieser zusätzlichen Ausführungsform weiterhin getrennt zugegeben.
Sollte eine der beiden Komponenten keinen Beschleuniger enthalten, so ist in mindestens eine der beiden Komponenten bzw. in deren Mischung der Beschleuniger zuzusetzen.

Somit wird in dieser Ausführungsform die Kaltplastik als 3-Komponenten-System gelagert und erst vor der Applikation vermischt. Die erste Komponente enthält dabei das Calciumoxid und optional den Haftvermittler. Die zweite Komponente die anderen Füllstoffe und die Pigmente. Die dritte Komponente enthält den nicht in den ersten beiden Komponenten enthaltenen Initiator. Alle weiteren Bestandteile der Kaltplastik können in der ersten und/oder in der zweiten Komponente enthalten sein. Bevorzugt sind alle weiteren Bestandteile, wie Additive oder das Reaktionsharz im gleichen Verhältnis zueinander in der ersten und in der zweiten Komponente enthalten.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfuryl(meth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen. Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.
Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte technische Funktion gewählt werden.
Der Monomeranteil des Reaktionsharzes liegt dabei zwischen 20 Gew% und 50 Gew%, bevorzugt zwischen 30 Gew% und 40 Gew%.

In sogenannten MO-PO-Systemen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes liegt dabei zwischen 10 Gew% und 40 Gew%, bevorzugt zwischen 15 Gew% und 25 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf.
Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnender Polymerisation gewonnen und setzen sich aus den für diese Anwendungen bekannten Bausteinen zusammen.

Als Hilfs- und Zusatzstoffe können zusätzlich Regler, Weichmacher, Paraffine, Stabilisatoren, Inhibitoren, Wachse und/oder Öle eingesetzt werden.
Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.
Als Weichmacher werden vorzugsweise Ester, Polyole, Öle, niedermolekulare Polyether oder Phthalate eingesetzt.

Zusätzlich können den Formulierungen zur Fahrbahnmarkierungen Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.
Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne, orange, gelbe, schwarze und lilafarbende anorganische Pigmente. Als Weißpigment wird in der Regel Titandioxid verwendet. Bei der erfindungsgemäßen Zugabe von Weißzement oder Feinkalk wird bereits ein guter Weißgrad erreicht, so dass weiße und farbige Fahrbahnmarkierungen mit weniger Titandioxid formuliert werden können. Bei farbigen Straßenmarkierungen wird dennoch ein gutes und klares Farbbild erzielt.

Ebenso können herkömmliche UV-Stabilisatoren eingesetzt werden. Vorzugsweise werden die UV-Stabilisatoren ausgewählt aus der Gruppe der Benzophenon-, Benzotriazol-, Thioxanthonat-, Piperidinolcarbonsäureester- oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Fahrbahnmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureamide.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 m²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Diese Formulierungsfreiheiten zeigen, dass das erfindungsgemäße Reaktionsharz bzw. die erfindungsgemäße Kaltplastik, das Reaktionsharz enthaltend, genauso formulierbar und additivierbar ist, wie eine etablierte Kaltplastik des Standes der Technik. Somit sind auch die Abriebfestigkeit, die Langlebigkeit, der Weißgrad, die Pigmentierung und die Griffigkeit mindestens so gut wie bei Systemen des Standes der Technik.

Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

Die erfindungsgemäßen Kaltplastiken können je nach Viskosität bzw. Zusammensetzung in den für 2-Komponentenreaktionsharze üblichen Auftragsdicken zwischen 0,1 mm und 5 mm mittels der etablierten 2K-Applikationsverfahren aufgetragen werden. Mittels Spritzverfahren können die erfindungsgemäßen Kaltplastiken (Kaltspritzplastiken) in Auftragsdicken von 0,1 bis 2 mm bevorzugt 0,3 bis 1 mm aufgetragen werden. Mittels Extrusionsverfahren maschinell oder manuell, z.B. mittels Rakel oder Kelle, können die erfindungsgemäßen Kaltplastiken mit Dicken von 0,5 bis 5 mm, bevorzugt zwischen 0,5 und 3 mm aufgetragen werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die Applikationsversuche erfolgen auf handelsüblichen Gehwegplatten aus Beton bezogen von der Firma Bauzentrum Rüppel GmbH, Gelnhausen, Deutschland. Die Applikation auf trockenem Beton erfolgte auf Gehwegplatten, welche mehr als 3 Monate bei Raumtemperatur trocken gelagert wurden. Die Applikationsversuche auf nassem Beton erfolgt auf Gehwegplatten, welche 4 h in Wasser gelagert, bei einer Neigung der Oberfläche von 45° ca. 30 Sekunden aufgestellt und anschließend mit Druckluftstoß abgeblasen wurden, um eine nasse, pfützenfreie Oberfläche zu erhalten.
Die Kaltplastik wurde mittels Rakel mit einer Schichtdicke von 2 mm auf die Gehwegplatte aufgebracht. Eine Stunde nach Applikation werden 6 Prüfstellen mit 5 cm Durchmesser 1 cm tief in den Plattenuntergrund nass eingeschnitten. 2 h nach Applikation werden Metallzugstempel mittels Bauschnellklebstoffkombination aus 1 Gewichtsteil PLEXTMON® 801 und 4 Gewichtsteilen PLEX 7742-F der Firma Evonik Röhm GmbH aufgeklebt.

Die Messung der Haftfestigkeit an den 6 Prüfstellen erfolgt 3 h nach Applikation gemäß DIN EN 1542 99 in Einklang mit DAfStb-RiLi 01., mittels eines Haftzugprüfgerätes F 10 Easy M2000 der Firma FREUNDL bei 23 °C mit einem Zugkraftanstieg von 100 N/s.

Messung der Topfzeit: Nach Zugabe des Initiators gemäß der Durchführungsvorschrift der Beispiele wird die Zeit gemessen, bis eine Probentemperatur von 32 °C erreicht wird oder das Material aufgrund der Viskosität nicht mehr verarbeitbar ist.

Die Messung des Ausbreitmaßes erfolgt durch Messung mit einem Lineal. Dazu werden 40 g der Formulierung aus 10 cm Höhe punktuell auf eine Pappkarte gegossen. Die Messung erfolgt nach vollständiger Aushärtung der Probe.

Messung der Härtungszeit: Die Messung der Härtezeit wird analog der Messung der Topfzeit mit Zugabe des Initiators begonnen. Nach Durchführung der Messung der Ausbreitmaß wird geprüft, wann die Oberfläche der auf die Pappkarte gegossenen Probe bei einem Fingertest keine Klebrigkeit mehr aufweist. Sobald dabei keine Veränderung der Oberfläche mehr festzustellen ist, wird die Zeitmessung gestoppt.

Die Messung des Daniel-Fließwertes: Die Messung wird z.B. mit einem "Elcometer 2290 Daniel Flow Gauge" der Firma Elcometer durchgeführt. Eine ca. 150 g Probe wird auf 20 °C temperiert, auf die horizontal liegende Probenschale aufgebracht und glattgestrichen. Dabei wird das überschüssige Material entfernt. Die Probenschale wird schnellstmöglich und ohne Erschütterungen in eine vertikale Position gebracht und die Zeitnahme dabei gestartet. Nach genau einer Minute wird auf der Skala abgelesen, wieweit die Probe geflossen ist.

### Beispiel 1 / Vergleichsbeispiel 1

Die erfindungsgemäße Kaltplastik in Beispiel 1 und die Kaltplastik in Vergleichsbeispiel 1 werden mit 20 Gew.-% DEGAROUTE^{®} 465 Standardreaktionsharz der Firma Evonik Röhm GmbH für Kaltplastiken, gemäß der in Tabelle 1 genannten Zusammensetzung hergestellt. DEGAROUTE® 465 setzt sich aus ca. 68 Gew% Monomeren, ca. 27 Gew% Polymethacrylat Bindemitteln, ca. 1,6 Gew% eines Vernetzers, einem Beschleuniger und Additiven wie Wachsen, Stabilisatoren und Verlaufshilfsmitteln zusammen.

Bei Bentone 27 handelt es sich um ein Thioxotropiehilfsmittel der Firma Elementis GmbH Cristobalite M 72 der Firma Sibelco N.V. wird als Grobfüllstoff, Omyacarb 5 / 15 GU, der Firma Omya GmbH als Feinfüllstoff Relexperlen HBAC00 (50 - 250 µm) der Firma Potter Industries Inc. als Reflexkörper und Titandioxid TR 92 der Firma Huntsman als Weißpigment verwendet

Bei Raumtemperatur wird das Reaktionsharz vorgelegt, ein Teil des Rheologieadditivs 5 Minuten eindispergiert, im nächsten Schritt das Dispergierhilfsmittels ebenfalls 5 Minuten, und anschließend das Titandioxid und die Feinfüllstoffe Calciumcarbonat und/oder Weißzement jeweils weitere 10 Minuten eindispergiert. Am Schluss wird das restliche Dispergierhilfsmittel eingearbeitet. Es wird eine Probe entnommen und der Daniel-Fließwert ermittelt.

In diese Kaltplastikmasse werden 2 Gew% Dibenzoylperoxid unter Rühren zugefügt.
Anschließend wird eine Probe der Kaltplastik entnommen und Topf- und Härtezeit, sowie Ausbreitmaß bestimmt. Die übrige Kaltplastik wird mit einer Schichtdicke von 2 mm bei 23 °C aufgerakelt und die Haftzugfestigkeit gemessen. Rheologische Eigenschaften und Härtungseigenschaften, sowie Haftfestigkeit der Kaltplastiken sind in Tabelle 1 zusammengestellt.

Mit Beispiel 1 erzielt man gegenüber Vergleichsbeispiel 1 bei vergleichbaren rheologischen Eigenschaften (Ausbreitmaß und Daniel-Test) der Kaltplastik eine verbesserte Haftung auf nassem Beton.

In den folgenden Tabellen 1,3 und 4 werden Harz, Fein- und Grobfüllstoffe, Pigment, Glasperlen und Zement bzw. Feinkalk mit insgesamt 100 Gew.% angegeben. Die dazu kommenden Additive und Haftvermittler (Byk 410, TEGO Dispers 670, Bentone 27, Aerosil 200, Dynasylan^{®} MEMO) werden gewichtsprozentual darauf aufschlägig bezogen. Die Formulierung in Tabelle 2 ist mit 100 Gew% auf alle Bestandteile bezogen.

**Tabelle 1**

| Beispiel | | |
|---|---|---|
| | 1 | Vergleichsbsp.1 |
| DEGAROUTE® 465 | | 20,0 Gew% |
| Byk 410 | | 0,1 Gew% |
| TEGO® Dispers 670 | | 0,1 Gew% |
| Bentone 27 | | 0,1 Gew% |
| Cristobalite M 72 | | 25,0 Gew% |
| Relexperlen HBAC00 | | 25,0 gew% |
| Titandioxid (TR 92) | | 10,0 Gew% |
| | 20,0 | |
| Weißzement | Gew% | - |
| Omyacarb 15 GU | - | 20,0 Gew% |
| Topfzeit (2% BPO) | 10 min | 10 min |
| Härtezeit (2% BPO) | 41 min | 30 min |
| Ausbreitmaß | 8,5 cm | 7,5 cm |
| Daniel-Fließwert | 13,5 Skt | 14,0 Skt |
| Haftzugzugfestigkeit auf nassem Beton | 1,6 N/mm² | Keine Haftung |

### Beispiel 2 / Vergleichsbeispiel 2

Analog zu Beispiel 1 werden in Beispiel 2 und Vergleichsbeispiel 2 die Massen gemäß den in Tabelle 2 angegebenen Zusammensetzungen hergestellt, wobei zusätzlich Dynasylan MEMO als Haftvermittler vor der Applikation unter Rühren zugegeben wird und die erfindungsgemäße Kaltplastik weitere 60 Sekunden gerührt wird.

**Tabelle 2**

| | Beispiel | |
|---|---|---|
| | 2 | Vergleichsbsp.2 |
| DEGAROUTE® 465 | | 25,0 Gew% |
| Byk 410 | | 0,3 Gew% |
| Disperbyk® 163 | | 0,05 Gew% |
| Aerosil 200 | | 0,2 Gew% |
| Betone 27 | | 0,2 Gew% |
| Cristobalite M 72 | | 13,0 Gew% |
| Relexperlen HBAC00 | | 20,0 gew% |
| Titandioxid (TR 92) | | 10,0 Gew% |
| | 30,0 | |
| Weißzement | Gew% | - |
| Omyacarb 15 GU | - | 30,0 Gew% |
| Haftvermittler | 1,25 | 1,25 Gew% |
| Dynasylan MEMO | Gew% | |
| Haftvermittlergehalt | | |
| bezogen auf | 5 Gew.-% | 5 Gew.-% |
| Reaktionsharzmasse | | |
| Haftzugzugfestigkeit auf nassem Beton | 2,3 N/mm² | Keine Haftung |

### Beispiele 3 und 4, sowie Vergleichsbeispiele 3

Die Massen in den Beispielen 3 und 4 werden mit Feinkalk anstelle von weißem Zement analog Beispiel 2 unter Verwendung des Haftvermittlers Dynasylan MEMO mit den in Tabelle 3 angegebenen Zusammensetzungen hergestellt und auf trockenem bzw. nassen Beton appliziert. Vergleichsbeispiel 3 wurde zusätzlich auf einer trockenen, mit 0,4 mm DEGADUR 112 Grundierharz von Firma Evonik Röhm GmbH behandelten Betonplatte appliziert. Selbst im Vergleich zur Applikation auf der grundierten Platte werden mit der bevorzugten Ausführung der Erfindung besser Haftfestigkeiten erzielt.

### Beispiel 5

Die Masse des Beispiels 5 wird analog Beispiel 4 mit den in Tabelle 4 angegebenen Zusammensetzungen hergestellt.

### Komponente 1

Bei Raumtemperatur wird das Reaktionsharz vorgelegt, ein Teil des Rheologieadditivs 5 Minuten eindispergiert, im nächsten Schritt wird der Feinkalk weitere 10 Minuten eindispergiert. Baschließend wird das Dynasylan^{®} MEMO zugefügt und 5 min eingerührt. Am Schluss wird das restliche Dispergierhilfsmittel eingearbeitet.

### Komponente 2

Bei Raumtemperatur wird das Reaktionsharz vorgelegt, ein Teil des Rheologieadditivs 5 Minuten eindispergiert, im nächsten Schritt das Dispergierhilfsmittels ebenfalls 5 Minuten, und anschließend das Titandioxid und der Feinfüllstoff Calciumcarbonat jeweils weitere 10 Minuten eindispergiert. Am Schluss wird das restliche Dispergierhilfsmittel eingearbeitet.

Jeweils aus beiden Komponenten werden Proben entnommen, zwei Wochen bei 25 °C gelagert, vermischt, 10 min gerührt und anschließend optisch bewertet. Gleichzeitig wird eine Probe des Beispiels 4 gelagert und bewertet.

Beide Komponenten der Kaltplastik werden im Verhältnis 1 zu 1 miteinander vermischt, 10 min gerührt. In diese Kaltplastikmasse werden anschließend 2 Gew% Dibenzoylperoxid unter Rühren zugefügt.
Die fertige Masse wird auf trockenem bzw. nassen Beton appliziert.

**Tabelle 3**

| | Beisp. 3 | Beisp. 4 | Vergleichsbsp. 3 |
|---|---|---|---|
| DEGAROUTE® 465 | 20,0 Gew% | 20,0 Gew% | 20,0 Gew% |
| Byk 410 | 0,1 Gew% | 0,1 Gew% | 0,1 Gew% |
| TEGO Dispers 670 | 0,1 Gew% | 0,25 Gew% | 0,1 Gew% |
| Betone 27 | 0,1 Gew% | 0,1 Gew% | 0,1 Gew% |
| Cristobalite M 72 | 15 Gew% | 25 Gew% | 25 Gew% |
| Reflexperlen HBAC00 | 25 Gew% | 25 Gew% | 25 Gew% |
| Titandioxid (TR 92) | 10 Gew% | 10 Gew% | 10 Gew% |
| Weißzement | 30,0 Gew% | - | - |
| Feinkalk Super 40 | - | 10 Gew% | - |
| Omyacarb 15 GU | - | 10 Gew% | 20 Gew% |
| Haftvermittler Dynasylan MEMO Haftvermittlergehalt | 1,0 Gew% | 0, 6 Gew% | - |
| bezogen auf die Reaktionsharzmasse | 5 Gew.-% | 3 Gew.-% | - |
| Topfzeit (2% BPO) | 10 min | 10 min | 10 min |
| Härtezeit (2% BPO) | 35 min | 30 min | 30 min |
| Ausbreitmaß | 8,5 cm | 9,0 cm | 7,5 cm |
| Daniel-Fließwert Haftzugzugfestigkeit | 13,5 Skt. | 18 Skt. | 14 Skt. |
| auf vorgrundiertem, trockenem Beton | - | - | 3,6 N/mm² |
| Haftzugzugfestigkeit auf trockenem Beton | - | 4,4 N/mm² | 2,8 N/mm² |
| Haftzugzugfestigkeit auf nassem Beton | 2,5 N/mm² | 3,3 N/mm² | Keine Haftung |

| | | | |
|---|---|---|---|
| Skt.: Skalenteile | | | |

**Tabelle 4**

| | Komponente | Komponente |
|---|---|---|
| Beispiel 5 | 1 | 2 |
| DEGAROUTE® 465 | 25,0 Gew% | 12,5 Gew% |
| Byk 410 | 0,15 Gew% | 0,06 Gew% |
| TEGO Dispers 670 | 0,05 Gew% | 0,06 Gew% |
| Betone 27 | 0,15 Gew% | 0,06 Gew% |
| Cristobalite M 72 | - | 15,5 Gew% |
| Titandioxid (TR 92) | - | 6,5 Gew% |
| Reflexperlen HBAC00 | - | 15,5 Gew% |
| Feinkalk Super 40 | 25,0 Gew% | - |
| Omyacarb 15 GU | - | - |
| Haftvermittler Dynasylan MEMO | 1,5 Gew% | - |
| Topfzeit (2% BPO) | 10 min | |
| Härtezeit (2% BPO) | 30 min | |
| Haftzugzugfestigkeit auf trockenem Beton | 4,1 N/mm² | |
| Haftzugzugfestigkeit auf nassem Beton | 3,4 N/mm² | |

Während die in der Zusammensetzung vergleichbare Formulierung des Beispiels 4 nach 2 Wochen eine Feststoffbildung und keine vollständige Aufrührbarkeit mehr zeigt, ist die Formulierung aus Beispiel 5 nach getrennter Lagerung der Komponenten 1 bis 3 und Mischung dieser vor der Applizierung lagerstabil und gut aufzurühren.

## Patentansprüche

1. Kaltplastik auf (Meth)acrylatbasis zur Markierung von Fahrbahnen, **dadurch gekennzeichnet, dass** die Kaltplastik ein Reaktionsharz, einen oder mehrere Initiatoren, mineralische Füllstoffe, Pigmente und mindestens 1,0 Gew% Calciumoxid enthält.

2. Kaltplastik gemäß Anspruch 1, **dadurch gekennzeichnet, dass** die Formulierung mindestens 2,5 Gew% Calciumoxid enthält.

3. Kaltplastik gemäß mindestens einem der Ansprüche 1 oder 2, **dadurch gekennzeichnet, dass** das Calciumoxid als Bestandteil einer anorganischen Mischung der Formulierung zugegeben wird, und dass die anorganische Mischung zu mindestens 50 Gew% aus Calciumoxid besteht.

4. Kaltplastik gemäß Anspruch 3, **dadurch gekennzeichnet, dass** es sich bei der anorganischen Mischung um gebrannten Kalk, Zement oder Portlandzement handelt.

5. Kaltplastik gemäß Anspruch 3 oder 4, **dadurch gekennzeichnet, dass** es sich bei der anorganischen Mischung um Weißzement mit einem Eisenoxid-Anteil kleiner 0,5 Gew% handelt.

6. Kaltplastik gemäß mindestens einem der Ansprüche 1 bis 5, **dadurch gekennzeichnet,**
**dass** die Kaltplastik folgende Komponenten aufweist:
15 Gew% bis 45 Gew% eines Reaktionsharzes,
1 Gew% bis 5 Gew% einer Mischung, enthaltend ein oder mehrere Initiatoren,
2 Gew% bis 40 Gew% einer anorganischen Mischung enthaltend Calciumoxid,
maximal 15 Gew% eines anorganischen Pigments, bevorzugt Titandioxid und
20 Gew% bis 60 Gew% weiterer mineralischer Füllstoffe.

7. Kaltplastik gemäß Anspruch 6, **dadurch gekennzeichnet, dass** das Reaktionsharz folgende Inhaltsstoffe aufweist:
5 Gew% bis 30 Gew% Dimethacrylate,
30 Gew% bis 70 Gew% (Meth)acrylate und/oder mit (Meth)acrylaten copolymerisierbare Komponenten,
C Gew% bis 40 Gew% Ürethan(meth)acrylate,
15 Gew% bis 35 Gew% Poly(meth)acrylate und/oder Polyester,
0 Gew% bis 5 Gew% Beschleuniger und
gegebenenfalls weitere Hilfsstoffe.

8. Kaltplastik gemäß Anspruch 7, **dadurch gekennzeichnet, dass** das Reaktionsharz zusätzlich 0,1 Gew% bis 20 Gew% eines Haftvermittlers enthalt.

9. Kaltplastik gemäß Anspruch 8, **dadurch gekennzeichnet, dass** es sich bei dem Haftvermittler um Methacrylsäure, um Acrylsäure, um ein Blend aus (Meth)acrylaten und Polyisocyanat-Prepolymeren, um Methacryloxyloxyethylphosphat oder um 3-Methacryloxypropyltrimethoxysilan handelt.

10. Kaltplastik gemäß Anspruch 6, **dadurch gekennzeichnet, dass** es sich bei dem Initiator um Dilauroylperoxid und/oder Dibenzoylperoxid handelt.

11. Kaltplastik gemäß Anspruch 7, **dadurch gekennzeichnet, dass** es sich bei dem Beschleuniger um ein tertiäres, aromatisch substituiertes Amin handelt.

12. Kaltplastik gemäß mindestens einem der Ansprüche 6 bis 11, **dadurch gekennzeichnet,**
**dass** der Initiator Bestandteil des Reaktionsharzes ist, und
**dass** der Beschleuniger nicht Bestandteil des Reaktionsharzes, sondern einer getrennten Komponente der Kaltplastik ist.

13. Markierungsverfahren, **dadurch gekennzeichnet, dass** eine Beton- oder eine andere Straßenoberfläche mit einer Kaltplastik gemäß mindestens einem der Ansprüche 1 bis 11, enthaltend mindestens 1,0 Gew% Calciumoxid, beschichtet wird.

14. Markierungsverfahren gemäß Anspruch 13, **dadurch gekennzeichnet, dass** die Kaltplastik mittels eines Spritz- oder Extrusionsverfahren auf die Beton- oder Asphaltoberfläche aufgebracht wird.

## Claims

1. (Meth)acrylate-based cold plastic for marking trafficways, **characterized in that** the cold plastic comprises a reactive resin, one or more initiators, mineral fillers, pigments and at least 1.0% by weight of calcium oxide.

2. Cold plastic according to Claim 1, **characterized in that** the formulation comprises at least 2.5% by weight of calcium oxide.

3. Cold plastic according to Claim 1 and/or 2, **characterized in that** the calcium oxide is added as a constituent of an inorganic mixture to the formulation, and that the inorganic mixture is composed of at least 50% by weight of calcium oxide.

4. Cold plastic according to Claim 3, **characterized in that** the inorganic mixture involves quicklime, or Portland cement or other cement.

5. Cold plastic according to Claim 3 or 4, **characterized in that** the inorganic mixture involves white Portland cement with iron oxide content smaller than 0.5% by weight.

6. Cold plastic according to at least one of Claims 1 to 5, **characterized in that** the cold plastic comprises the following components:
from 15% by weight to 45% by weight of a reactive resin,
from 1% by weight to 5% by weight of a mixture comprising one or more initiators,
from 2% by weight to 40% by weight of an inorganic mixture comprising calcium oxide,
at most 15% by weight of an inorganic pigment, preferably titanium dioxide, and
from 20% by weight to 60% by weight of other mineral fillers.

7. Cold plastic according to Claim 6, **characterized in that** the reactive resin comprises the following ingredients:
from 5% by weight to 30% by weight of dimethacrylates,
from 30% by weight to 70% by weight of (meth)acrylates and/or components copolymerizable with (meth)acrylates,
from 0% by weight to 40% by weight of urethane (meth)acrylates,
from 15% by weight to 35% by weight of poly(meth)acrylates and/or polyesters,
from 0% by weight to 5% by weight of accelerators and optionally other auxiliaries.

8. Cold plastic according to Claim 7, **characterized in that** the reactive resin also comprises from 0.1% by weight to 20% by weight of an adhesion promoter.

9. Cold plastic according to Claim 8, **characterized in that** the adhesion promoter involves methacrylic acid, involves acrylic acid, involves a blend made from (meth)acrylates and from polyisocyanate prepolymers, involves methacryloxyloxyethyl phosphate or involves 3-methacryloxypropyltrimethoxysilane.

10. Cold plastic according to Claim 6, **characterized in that** the initiator involves dilauroyl peroxide and/or dibenzoyl peroxide.

11. Cold plastic according to Claim 7, **characterized in that** the accelerator involves a tertiary, aromatically substituted amine.

12. Cold plastic according to at least one of Claims 6 to 11, **characterized in that**
the initiator is a constituent of the reactive resin, and
that the accelerator is not a constituent of the reactive resin, but instead is a constituent of a separate component of the cold plastic.

13. Marking method, **characterized in that** a concrete surface or any other road surface is coated with a cold plastic according to at least one of Claims 1 to 11, comprising at least 1.0% by weight of calcium oxide.

14. Marking method according to Claim 13, **characterized in that** the cold plastic is applied by means of a spray method or extrusion method to the concrete surface or asphalt surface.

## Revendications

1. Plastique à froid à base de (méth)acrylate pour le marquage de voies de circulation, **caractérisé en ce que** le plastique à froid contient une résine de réaction, un ou plusieurs amorceurs, des charges minérales, des pigments et au moins 1,0 % en poids d'oxyde de calcium.

2. Plastique à froid selon la revendication 1, **caractérisé en ce que** la composition contient au moins 2,5 % en poids d'oxyde de calcium.

3. Plastique à froid selon au moins l'une quelconque des revendications 1 ou 2, **caractérisé en ce qu'**on ajoute à la composition l'oxyde de calcium en tant que composant d'un mélange inorganique, et **en ce que** le mélange inorganique consiste à raison d'au moins 50 % en poids en oxyde de calcium.

4. Plastique à froid selon la revendication 3, **caractérisé en ce que** le mélange inorganique consiste en chaux calcinée, ciment ou ciment Portland.

5. Plastique à froid selon la revendication 3 ou 4, **caractérisé en ce que** le mélange inorganique consiste en ciment blanc ayant une teneur en oxyde de fer inférieure à 0,5 % en poids.

6. Plastique à froid selon au moins l'une quelconque des revendications 1 à 5, **caractérisé en ce que**
le plastique à froid comporte les composants suivants :
15 % en poids à 45 % en poids d'une résine de réaction,
1 % en poids à 5 % en poids d'un mélange, contenant un ou plusieurs amorceurs,
2 % en poids à 40 % en poids d'un mélange inorganique contenant de l'oxyde de calcium,
au maximum 15 % en poids d'un pigment inorganique, dioxyde de titane de préférence et
20 % en poids à 60 % en poids d'autres charges minérales.

7. Plastique à froid selon la revendication 6, **caractérisé en ce que** la résine de réaction comporte les composants suivants :
5 % en poids à 30 % en poids de diméthacrylates,
30 % en poids à 70 % en poids de (méth)acrylates et/ou de composants copolymérisables avec des (méth)acrylates,
0 % en poids à 40 % en poids d'uréthane(méth)acrylates,
15 % en poids à 35 % en poids de poly(méth)acrylates et/ou polyesters,
0 % en poids à 5 % en poids d'accélérateur et éventuellement autres adjuvants.

8. Plastique à froid selon la revendication 7, **caractérisé en ce que** la résine de réaction contient en outre 0,1 % en poids à 20 % en poids d'un promoteur d'adhérence.

9. Plastique à froid selon la revendication 8, **caractérisé en ce que** le promoteur d'adhérence consiste en acide méthacrylique, en acide acrylique, en un mélange de (méth)acrylates et prépolymères polyisocyanate, en phosphate de méthacryloyloxyéthyle ou en 3-méthacryloxypropyltriméthoxysilane.

10. Plastique à froid selon la revendication 6, **caractérisé en ce que** l'amorceur consiste en peroxyde de dilauroyle et/ou peroxyde de dibenzoyle.

11. Plastique à froid selon la revendication 7, **caractérisé en ce que** l'accélérateur consiste en une amine tertiaire à substitution aromatique.

12. Plastique à froid selon au moins l'une quelconque des revendications 6 à 11, **caractérisé**
**en ce que** l'amorceur est un composant de la résine de réaction, et
**en ce que** l'accélérateur n'est pas un composant de la résine de réaction, mais un composant séparé du plastique à froid.

13. Procédé de marquage, **caractérisé en ce qu'**on revêt une surface de béton ou une autre surface de voie de circulation avec un plastique à froid selon au moins l'une quelconque des revendications 1 à 11, contenant au moins 1,0 % en poids d'oxyde de calcium.

14. Procédé de marquage selon la revendication 13, **caractérisé en ce que** le plastique à froid est appliqué par un procédé de pistolage ou d'extrusion sur la surface de béton ou d'asphalte.
